# EUROPEAN PATENT APPLICATION

(11) **EP 1 471 402 A2**
(43) Date of publication of application: **27.10.2004**
(21) Application number: 04251363.0
(22) Date of filing: 10.03.2004
(51) Int. Cl.: G05B 19/402

(54) **Teaching position correcting apparatus**

(30) Priority: 17.03.2003 JP 2003071910
(71) Applicant: FANUC LTD, Minamitsuru-gun, Yamanashi 401-0597 (JP)
(72) Inventor: Watanabe, Atsushi, Suginami-ku Tokyo, 168-0072 (JP); Ito, Takayuki, Minamitsuru-gun Yamanashi, 401-0310 (JP); Kosaka, Tetsuya, R. 11-403 FANUC, Minamitsuru-gun Yamanashi, 401-0511 (JP); Takizawa, Katsutoshi, Tokyo, 157-0067 (JP)
(74) Representative: Billington, Lawrence Emlyn

(57) **Abstract**

A work tool (4) mounted on an arm tip end of a robot (2) is allowed to move toward a teaching point of a robot operation program, and to stop the work tool (4) before it reaches the teaching point. The robot is moved by jog feeding from the stopped position to a target position (5). In this manner, the teaching point of the robot operation program is corrected.

## Description

### BACKGROUND OF THE INVENTION

### 1. Field of the Invention

The present invention relates to an apparatus for correcting a teaching point position and an attitude of a robot operation program.

### 2. Description of the Related Art

When a relative position between a robot and an operation target or attitudes thereof are changed because position of the robot or operation target is changed, a teaching position of an already-prepared robot operation program must be corrected in some cases. In the case of an operation program prepared by an off-line program, it is necessary to correct a teaching point position of the robot operation program prepared off-line in accordance with actual position of the operation target at a worksite due to an error between positions of the robot and the operation target prepared off-line and actual positions of the robot and the operation target. The teaching position data of the program of the robot usually includes information of a position of an work tool and an attitude thereof. In the following description, the correction of the teaching point position means to correct one or both of a position of the teaching position of the existing program and an attitude thereof.

The correcting operation of the teaching position of the robot operation program is carried out while reproducing the already taught robot program at low speed in a step feeding from teaching point to teaching point and while checking the position of each teaching position. When the correcting operation is carried out, the robot is stopped before the teaching position such that the robot or an work tool of the robot does not come into contact with the operation target, and buttons of a teaching pendant are operated to move the position and attitude of the robot by jogging and the point position and the attitude are corrected to desired values.

In the conventional correcting method of the teaching point position, the robot is stopped before the teaching position during the step feeding action so that the robot or an work tool of the robot does not come into contact with the operation target and then, the teaching position is corrected manually one point by one point. This work takes time and labor. If the input of robot stopping command is delayed, there is an adverse possibility that the work tool collides against the operation target and the work tool or the operation target is damaged. If the robot is stopped is too early before reaching the teaching point, the manually feeding time by jog action becomes long and the operation efficiency is deteriorated.

### SUMMARY OF THE INVENTION

The present invention relates to a teaching position correcting apparatus for correcting a teaching point position of a robot operation program.

A first aspect of the present invention provides a teaching position correcting apparatus for correcting a teaching point position of a robot operation program, comprising work tool moving/stopping means for allowing an work tool mounted on an arm tip end of the robot to move toward a teaching point of the robot operation program and to stop the work tool before it reaches the teaching point; jog feed means for moving the robot the robot by fog feeding from a position where the work tool is stopped by the work tool moving/stopping means; contact-judging means for judging whether the work tool and an operation target come into contact with each other; and teaching position correction instructing means for commanding to correct the teaching position.

The teaching position correcting apparatus can employ the following aspects:

The contact-judging means applies an electric current to the work tool to judge whether or not the work tool and an operation target come into contact with each other from electrical variation of conduct by contact with the operation target.

The contact-judging means judges whether the work tool and an operation target come into contact with each other from a motor current value of the robot.

The contact-judging means includes a sensor, provided on said work tool, for detecting the contact of the work tool with the operation target.

The work tool moving/stopping means stops the robot when the contact-judging means detects the contact between the work tool and the operation target.

A second aspect of the invention provides a teaching position correcting apparatus for correcting a teaching point position of a robot operation program, comprising work tool moving/stopping means for allowing an work tool mounted on an arm tip end of the robot to move toward a teaching point of the robot operation program and to stop the work tool before it reaches the teaching point; jog feed means for moving the robot by jog feeding from a position where the work tool is stopped by the work tool moving/stoppingmeans; positional relation presenting means for presenting, to an operator, a positional relation between the work tool and an operation target; and teaching position correction instructing means for commanding to correct a teaching position.

The positional relation presenting means constituting the teaching position correcting apparatus of this aspect includes an work tool tip end which can be attached to and detached from the work tool, camera means for capturing the operation target in view, and image display means for presenting an image of the camera means to an operator.

The first and second aspects of the teaching position correcting apparatus according to the invention can employ the following aspects:

The jog feed means allows the robot to move along a jog feed coordinate system based on an attitude of the work tool.

The work tool of the robot includes a movable portion which is driven by a servo mechanism, and the movable portion has a mechanism which comes into contact with the operation target.

The work tool is a spot welding gun or a servo hand which grasps an article by a servo mechanism.

The teaching position correcting apparatus further comprises means for extracting or designating a teaching point to be taught and corrected from a program.

The teaching position correcting apparatus further comprises means for automatically correcting a next and subsequent teaching point positions based on a position correcting amount of one or more teaching points whose teaching position was corrected.

A third aspect of the invention provides a teaching position correcting apparatus for correcting a teaching point position of a robot operation program, comprising work tool moving/stopping means for allowing an work tool mounted on an arm tip end of the robot to move toward a teaching point of the robot operation program and to stop the work tool before it reaches the teaching point; jog feed means for moving the robot by jog feeding from a position where the work tool is stopped by the work tool moving/stopping means, teaching position correction instructing means for commanding to correct a teaching position, and teaching point position correcting means for automatically correcting a next and subsequent teaching point positions based on a position correcting amount of one or more teaching points whose teaching position was corrected.

The teaching position correcting apparatus of the aspect further comprises means for calculating an attitude variation amount of the robot work tool at a current teaching point and a next teaching point, and means for judging whether a next and subsequent teaching point positions should be automatically corrected based on the attitude variation amount.

A fourth aspect of the invention provides a teaching position correcting apparatus for correcting a teaching point position of a robot operation program, comprising work tool moving/stopping means for allowing an work tool mounted on an arm tip end of the robot to move toward a teaching point of the robot operation program and to stop the work tool when the distance between the work tool and the teaching point becomes shorter than a predetermined distance; jog feed means for moving the robot by j og feeding from a position where the work tool is stopped by the work tool moving/stopping means; and teaching position correction instructingmeans for commanding to correct a teaching position.

The present invention provides an apparatus capable of easily carrying out the correcting operation of the teaching position of a robot program within a short time.

### BRIEF DESCRIPTION OF THE DRAWINGS

These and other objects as well as advantages of the invention will become clear by the following description of preferred embodiments of the invention with reference to the accompanying drawings, wherein:
Fig. 1 shows constituent elements of an embodiment of a teaching position correcting apparatus according to the present invention;
Fig. 2 is a flowchart showing outline correcting procedure of a teaching position using the teaching position correcting apparatus shown in Fig. 1;
Fig. 3 is a flowchart for explaining procedure for stopping a robot at a point before a teaching position using the teaching position correcting apparatus shown in Fig. 1; and
Fig. 4 is a diagram for explaining an example in which the teaching position correcting apparatus shown in Fig. 1 comprises camera means for presenting a relative positional relation between an work tool and an operation target to an operator, and image display means.

### DESCRIPTION OF THE EMBODIMENTS

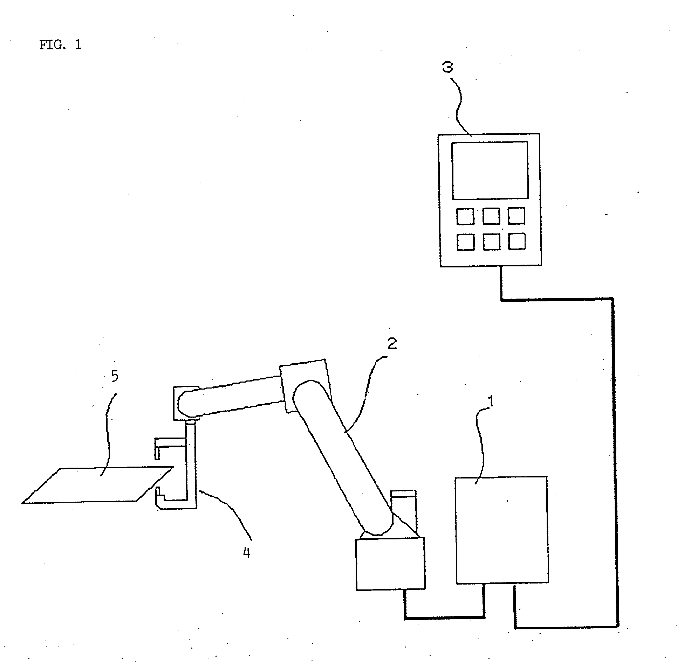

Fig. 1 shows a configuration of an embodiment of a display position correcting apparatus according to the present invention. A robot 2 is connected to a robot controller 1. The robot controller 1 controls servomotors which drive shafts of an arm of the robot 2, and operates the robot 2. The robot controller 1 is a robot controller of a teaching playback type, and has functions for preparing, storing, teaching and reproducing a program which operates the robot.

A teaching pendant 3 for carrying out various operations of the robot such as jog feeding (manual operation) of the robot and preparing a program is connected to the robot controller 1.

The work tool 4 is mounted on an arm tip end of the robot 2 for carrying out an operation for an operation target 5. In the example shown in Fig. 1, the operation target 5 is a plate metal such as an automobile body, and the work tool 4 is a spot welding gun, for example. The operation target 5 is fixed to a fixing jig (not shown), and is disposed in front of the robot 2 at a given position and attitude. The work tool 4 is a spot welding gun for example. The spot welding gun 4 opens and closes a welding chip of a tool tip end portion by the servomotors and carries out the spot welding. The welding chip of the spot welding gun 4 is opened and closed while controlling the servomotor for the spot welding gun 4 by the robot controller 1. The spot welding gun 4 and the robot controller 1 are connected to a spot welding power supply device (not shown), and carries out welding from a command from the robot controller 1. Since such a spot welding gun 4 is well known, detailed explanation thereof will be omitted.

In the robot controller 1, a program for applying spot welding to the operation target 5 fixed to the fixing jig is stored. When this robot is relocated in another factory or another place in the same factory, or when the off-line prepared operation program is applied to an actual robot, it becomes necessary to correct the teaching position of the program.

It is difficult to make the relative positional relation between the robot 2 and the fixing jig exactly the same before and after the relocation. It is also difficult to make the actual robot 2 and the operation target 5 the same as the relative positional relation between various elements of a model when the operation program is prepared off-line. Even if the positional relation therebetween is measured before relocation and the positional relation is made the same after the relocation, an error of about several millimeters to several tens of millimeters is caused due to an error of measurement or disposition. Therefore, it is absolutely necessary to correct the teaching position of the program after the relocation or when the operation program prepared off-line is applied.

In the present invention, when the teaching point position is corrected, the controller is switched to a teaching point position correcting mode so that action suitable for correcting the teaching point position is carried out. The modes are switched, for example, by pushing a teaching mode switching button (not shown) on the teaching pendant 3 or by switching the controller into the position correcting mode by a menu operation of the teaching pendant 3.

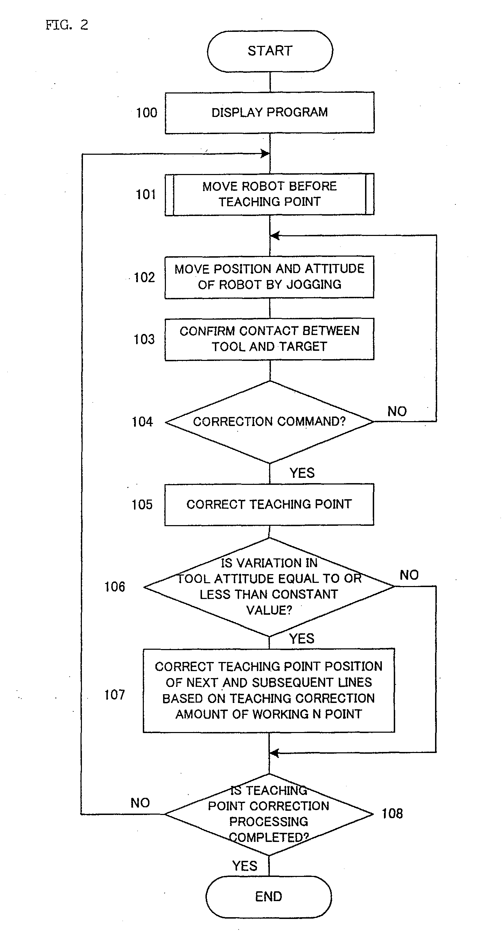

Fig. 2 shows an outline of correcting procedure of the teaching position in the embodiment of the invention. If the controller is switched into the position correcting mode, the operation program of the robot is displayed on a display screen of the teaching pendant 3 (step 100). In this screen, a teaching position to be corrected is selected from a display program and designated, therebymoving the robot toward the teaching position where the designated correction is to be carried out (step 101) as described later. If the robot is moved directly to the teaching position of the program before the position correction, since the positional relation between the robot 2 and the operation target 5 is changed before and after the relocation, there is a possibility that the work tool 4 comes into contact with the operation target 5. Thus, in step 101, the robot is allowed to move toward the teaching point but the robot is stopped before it reaches the teaching position of the teaching point. This point will be described later.

From this stopped position, an operator moves the robot manually (jogging) such that the robot assumes desired position and attitude with respect to the operation target (step 102). Usually, in the spot welding, the position is taught such that the welding chip at a tip end of the welding gun which is the work tool 4 comes into contact with the platemetal of the operation target.

It may be judged visually whether the work tool 4 and the operation target 5 came into contact with each other, but means for judging whether the work tool 4 and the operation target 5 came into contact with each other may be provided (step 103) . For example, voltage is applied to the work tool 4, and if the work tool 4 and the operation target 5 come into contact with each other and they are brought into electrical conduction (operation target is grounded), the contact can be detected by detecting variation in current or voltage flowing through the work tool 4. If the work tool 4 is the spot welding gun as in this embodiment, a circuit which detects such a variation utilizing a circuit in a welding power supply (not shown) may be provided. Similarly, a power supply circuit for driving the work tool such as a hand can be used. Alternatively, it may be judged whether the work tool and the operation target come into contact with each other by a motor current value of the robot during jogging, and when they come into contact with each other, the robot may be stopped. Alternatively, a disturbance estimating observer may be incorporated in a motor control circuit of the robot, the disturbance torque may be estimated by this observer, and the contact between the work tool and the operation target may be detected by this estimated disturbance torque. Alternatively, an approach sensor may be mounted in the vicinity of a tip end of the welding chip, the sensor may detect a fact that a distance between the chip and the operation target becomes equal to or shorter than a given value, thereby judging the contact.

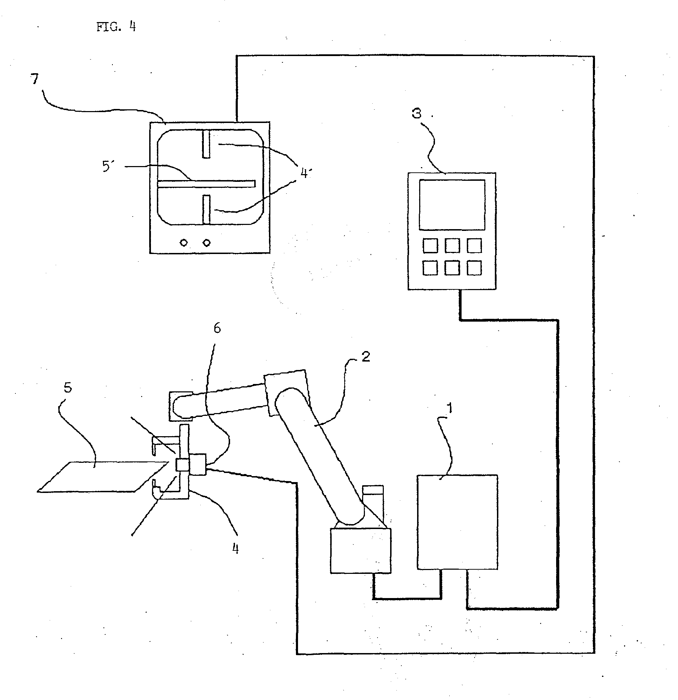

Alternatively, instead of judging the contact between the work tool and the operation target, means for presenting the positional relation between the work tool and the operation target to an operator may be provided. For example as shown in Fig. 4, a camera 6 is detachably mounted on the work tool 4 (welding gun) so that the chip tip end can be captured in view. The operator checks the positional relation between the operation target 5 and the chip tip end of the work tool 4 from the image 4' of the tip end portion of the work tool and the image 5' of the operation target displayed on a monitor screen 7 which displays images from the camera, and the operator may correct such that the robot assumes desired position and attitude by jogging.

Alternatively, the operator may visually check whether the robot assumes the desired position and the attitude without providing the judging means which judges the contact or means for presenting the positional relation between the work tool and the operation target by the image.

The operations in steps 102 and 103 are carried out until the contact between the work tool 4 and the operation target 5 is confirmed and until it is confirmed that the work tool 4 assumes the desired position and attitude with respect to the operation target 5 by jogging. After the robot is operated by jogging and the robot assumes the desired position and attitude, if the correction command is input by the teaching pendant 3 (step 104), the teaching point position is corrected as a new teaching position using the position and attitude of the robot at that time (step 105).

When the position and attitude of the robot are to be moved by jogging, if a jog feed coordinate system is automatically set based on the attitude of the current work tool, the operability is enhanced. In this case, if a coordinate system in whichmoving direction vector to a teaching point selected and designated from the current position coincides with an approach vector of the work tool is automatically set as a jog feed coordinate system and jog feeding is carried out based on this coordinate system, it becomes easy to move the robot by jog feeding to target position and attitude. In the case of the spot welding gun shown in Fig. 1 for example, after it is moved before the teaching point in step 101, the jog feed coordinate system may automatically be switched to a coordinate system having a coordinate axis which is in parallel to the opening/closing direction of the chip of the spot welding gun and a coordinate axis in a direction perpendicular to the coordinate axis.

If the teaching point is corrected, the robot controller calculates variation amount of attitude of the work tool between the teaching point and a next teaching point, and judges whether a variation amount of attitude between the teaching points is equal to or less than a given value (step 106). When the attitude variation amount is equal to or less than a given value, it is judged that the attitude is not changed and a constant work is continuously carried out, and subsequent teaching point positions are automatically corrected (step 107). That is, the position correcting amount (including variation amount of both position and attitude) of the corrected teaching point position is temporarily stored in a memory, and positions of subsequent teaching points are automatically corrected in the program based on the position correcting amount. With this, since the positions of the subsequent teaching points are previously corrected based on the already corrected correction amount of the teaching point, there is a merit that the amount of correction by the jogging is small.

As a correcting method of the subsequent teaching point positions, it is possible to use a method in which the same correction amount as that of the lastly corrected position correcting amount of the teaching point is added to the subsequent teaching point positions, or a method in which the average value of the position correcting amount of the latest N-number (N is 2 or more) of points is added to the subsequent teaching point positions.

If the attitude variation amount is not equal to or less than the given value and the attitude variation is great in step 106, it can be assumed that the operation of the robot is largely varied between the current point and the next point and there is no continuity. Therefore, the automatic correction of the subsequent teaching point positions is not carried out and the procedure proceeds to step 108.

In step 108, it is judged whether the positions and attitudes of all the teaching points to be corrected were corrected. The processing of the above-described steps 101 to 108 are repeated for all the teaching points to be corrected, and if the correction of the position and attitude of all the teaching points to be corrected is completed, the operator releases the teaching point correction mode, thereby completing the correcting operation of the teaching point position and attitude. If the correcting operation of the teaching point position and attitude is not completed, the procedure proceeds to step 101 from step 108.

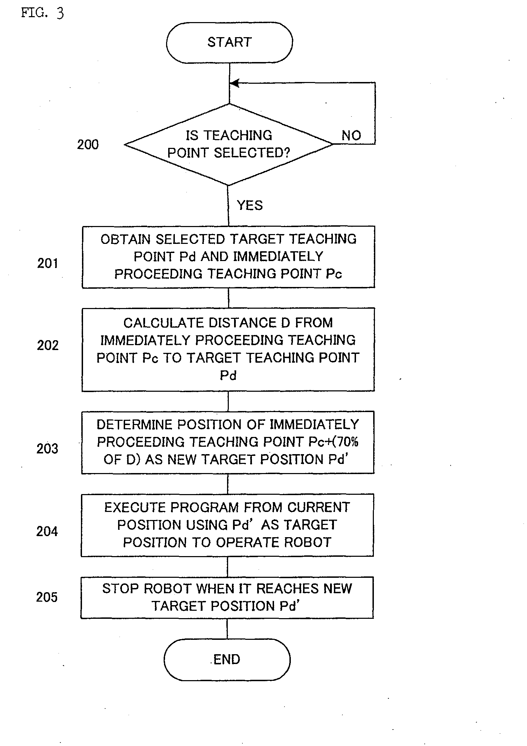

Fig. 3 is a flowchart of processing carried out by a processor of the robot controller 1 for realizing the procedure for stopping the robot before the teaching point in step 101 of the operation action shown in Fig. 2.

The operator brings a cursor on a line where there is a teaching point whose position is to be corrected, from the program of the robot displayed on the teaching pendant 3, and the operator selects and designates a target teaching point. In the case of spot welding, for example, a teaching point of a welding point to be spot welded is selected, it is unnecessary to select a teaching point such as an approach point to this welding point or a retreat point from the welding point, and such teaching point is not selected. The processor of the robot controller 1 judges whether or not the teaching point is selected and designated (step 200). If the teaching point is selected and designated, a position Pd of the teaching point in the designated program and a teaching point position Pc which is the immediately proceedingpositionoftheselectedanddesignatedteachingpoint position Pd is read from the memory (step 201).

Next, a distance D between the selected and designated teaching point position Pd and the immediately proceeding teaching point position P is obtained (step 202), and an intermediate position (near the selected and designated teaching point Pd) in the robot path from the immediately proceeding teaching point position Pc to the selected and designated teaching point Pd is determined as a new target position Pd'. In this embodiment, a position on the path which is 70% of the distance D from the teaching point position Pc to the teaching point Pd is calculated as the new target position Pd' (step 203) .

The program is carried out at a set predetermined speed from the current position, and the robot is allowed to move along the program path from the designated teaching point to the immediately proceeding teaching point position Pc. The robot is allowed to move along the program path from the immediately proceeding teaching point position Pc of the designated teaching point to the new target position Pd' (step 204). If the robot reaches the new target position Pd' , the robot is stopped (step 205).

Thereafter, the action procedures of step 102 and subsequent steps in Fig. 2 are carried out, and the selected and designated teaching point is corrected to the target position and attitude by jog feed action.

In the normal program reproducing operation, the robot action is controlled while using the read teaching point position Pd as a target position, but in this embodiment, the robot is stopped at a position before the robot reaches the selected and designated teaching point position. In this embodiment, the position on the robot path which is 70% of the distance D between the selected and designated teaching point position and the immediately proceeding teaching point is determined as the new target position Pd'. With this control, it is possible to stop the robot before the robot reaches the teaching point position on the program, to avoid the contact and collision between the work tool and the operation target, and to position the robot in the vicinity of the teaching point.

In this operation, conventionally, the robot is allowed to move toward the teaching position Pd on the program, and the operator manually stops the robot at an appropriate point before the robot reaches the position Pd. Therefore, the robot moves to the teaching position Pd before correction due to operation error and the robot and the operation target collides against each other in some cases. However, the present invention does not depend on the operator's operation, the robot is allowed to stop automatically before the teaching point with safety and then, the teaching point position is corrected by jogging. Therefore, it is possible to reliably correct the teaching point position attitude within a short time with safety.

The determining method of the new target position Pd' is not limited to the above method. For example, the target position Pd' may be before the selected and designated teaching point position Pd by a constant distance. The constant distance needs not be a fixed distance, and it may be 10mm, 20mm or the like which is freely set by an operator in accordance with operation.

The robot is allowed to move along the program path to the new target position Pd' automatically in step 204 based on the program. During this time, when the contact detecting means is allowed to operate effectively such that the means detects whether the work tool 4 and the operation target 5 come into contact and if the means detects the contact, the robot action may be stopped.

Although the work tool 4 is a spot welding gun in the above embodiment, the present invention can be applied in addition to the spot welding gun if the work tool 4 has a function to come into contact with the operation target by a servo mechanism. For example, the present invention can be applied also to a so-called servo hand in which a distance of pawls of the hand which grasps an article can be controlled by a servo mechanism and the hand can grasp operation targets having various distances.

Depending upon application of a robot or a deviation amount between the robot and the operation target, it is unnecessary to correct all of teaching points of the program and it is sufficient to correct only one or some of teaching points which come into contact or which approach the target in some cases. For example, in the case of a program of a spot welding, since the work tool and the operation target approach each other at the teaching point where the spot welding is carried out, the teaching correction is necessary. However, at points other than the point where the spot welding is carried out, such as passing point and escaping point, the work tool and the operation target are sufficiently separated from each other, so that the teaching correction is unnecessary in some cases. In such a case, if only points which are to be corrected are extracted from the program and the teaching correction is carried out on those points, the efficiency of the operation will be enhanced.

Therefore, although the operator selects and designates a teaching point which requires the correction in the above embodiment, it is possible, in some cases, to judge whether the teaching point requires the correction from the operation program depending upon the operation. For example, in the case of a spot welding program described above, a teaching point where the spot welding is carried out is provided with a welding additional command (command for closing a gun or command for pressurizing). In the case of a program in which a servo hand grasps an article, a teaching point for grasping the article is provided with an additional command for closing the hand. Thereupon, the controller 1 may execute a program such that the teaching correction is carried out at a teaching point of the operation program where the additional command for controlling a welding gun or servo hand is provided, while the correction of teaching position is skipped at other teaching points of the operation program, so that the teaching correction may be carried out only for points which require the teaching correction. The robot may be allowed to move by manual operation to a teaching point position which is to be corrected, without moving the robot, so that the robot is allowed to automatically move from this point to a point proceeding to the teaching point (which corresponds to the immediately proceeding teaching point position in the above-described embodiment) which is to be corrected, and is stopped and positioned at target position and attitude by jogging, where teaching point is corrected. When the number of teaching points to be corrected is small, this method is effective.

According to the present invention, since the robot automatically stops before a teaching point to be corrected, the teaching correction operation of the robot can easily be carried out in a short time.

## Claims

1. A teaching position correcting apparatus for correcting a teaching point position of a robot operation program, comprising
work tool moving/stopping means for allowing an work tool mounted on an arm tip end of said robot to move toward a teaching point of said robot operation program and to stop said work tool before it reaches the teaching point,
jog feed means for moving said robot by jog feeding from a position where said work tool is stopped by said work tool moving/stopping means,
contact-judging means for judging whether said work tool and an operation target come into contact with each other, and
teaching position correction instructing means for commanding to correct the teaching position.

2. The teaching position correcting apparatus according to claim 1, wherein said contact-judging means applies an electric current to the work tool to judge whether or not said work tool and an operation target come into contact with each other from electrical variation of conduct by contact with the operation target.

3. The teaching position correcting apparatus according to claim 1, wherein said contact-judging means judges whether said work tool and an operation target come into contact with each other from a motor current value of said robot.

4. The teaching position correcting apparatus according to claim 1, wherein said contact-judging means includes a sensor, provided on said work tool, for detecting the contact of the work tool with the operation target.

5. The teaching position correcting apparatus according to any one of claims 1 to 4, wherein said work tool moving/stopping means stops said robot when said contact-judging means detects the contact between said work tool and said operation target.

6. A teaching position correcting apparatus for correcting a teaching point position of a robot operation program, comprising
work tool moving/stopping means for allowing an work tool mounted on an arm tip end of said robot to move toward a teaching point of said robot operation program and to stop said work tool before it reaches the teaching point,
jog feed means for moving said robot by jog feeding from a position where said work tool is stopped by said work tool moving/stopping means,
positional relation presenting means for presenting, to an operator, a positional relation between said work tool and an operation target, and
teaching position correction instructing means for commanding to correct a teaching position.

7. The teaching position correcting apparatus according to claim 6, wherein said positional relation presenting means includes;
an work tool tip end which can be attached to and detached from said work tool,
camera means for capturing the operation target in view, and
image display means for presenting an image of said camera means to an operator.

8. The teaching position correcting apparatus according to claim 1 or 6, wherein said jog feed means allows the robot to move along a jog feed coordinate system based on an attitude of said work tool.

9. The teaching position correcting apparatus according to claim 1 or 6, wherein said work tool of said robot includes a movable portion which is driven by a servo mechanism, and said movable portion has a mechanism which comes into contact with the operation target.

10. The teaching position correcting apparatus according to claim 1 or 6, wherein said work tool is a spot welding gun.

11. The teaching position correcting apparatus according to claim 1 or 6, wherein said work tool is a servo hand which grasps an article by a servo mechanism.

12. The teaching position correcting apparatus according to claim 1 or 6, further comprising means for extracting a teaching point to be taught and corrected from a program.

13. The teaching position correcting apparatus according to claim 1 or 6, further comprising means for designating a teaching point to be taught and corrected from a program.

14. The teaching position correcting apparatus according to claim 1 or 6, further comprising means for automatically correcting a next and subsequent teaching point positions based on a position correcting amount of one or more teaching points whose teaching position was corrected.

15. A teaching position correcting apparatus for correcting a teaching point position of a robot operation program, comprising
work tool moving/stopping means for allowing an work tool mounted on an arm tip end of said robot to move toward a teaching point of said robot operation program and to stop said work tool before it reaches the teaching point,
jog feed means for moving said robot by jog feeding from a position where said work tool is stopped by said work tool moving/stopping means,
teaching position correction instructing means for commanding to correct a teaching position, and
teaching point position correcting means for automatically correcting a next and subsequent teaching point positions based on a position correcting amount of one or more teaching points whose teaching position was corrected.

16. The teaching position correcting apparatus according to claim 15, further comprising means for calculating an attitude variation amount of the robot work tool at a current teaching point and a next teaching point, and means for judging whether a next and subsequent teaching point positions should be automatically corrected based on the attitude variation amount.

17. A teaching position correcting apparatus for correcting a teaching point position of a robot operation program, comprising
work tool moving/stopping means for allowing an work tool mounted on an arm tip end of said robot to move toward a teaching point of said robot operation program and to stop said work tool when the distance between said work tool and said teaching point becomes shorter than a predetermined distance,
jog feed means for moving said robot by jog feeding from a position where said work tool is stopped by said work tool moving/stopping means, and
teaching position correction instructing means for commanding to correct a teaching position.
